# EUROPEAN PATENT SPECIFICATION

(11) **EP 4 023 828 B1**
(45) Date of publication and mention of the grant of the patent: **01.01.2025**
(21) Application number: 20878892.7
(22) Date of filing: 17.07.2020
(51) Int. Cl.: E03D 11/14, F16B 21/12, F16B 21/16

(54) **FIXING DEVICE AND SANITARY WARE HAVING SAME**
BEFESTIGUNGSVORRICHTUNG UND SANITÄRGEGENSTAND DAMIT
DISPOSITIF DE FIXATION ET ÉQUIPEMENT SANITAIRE LE COMPRENANT

(30) Priority: 22.10.2019 CN 201911008478
(43) Date of publication of application: 06.07.2022
(73) Proprietor: XIAMEN R&T PLUMBING TECHNOLOGY CO., LTD., Xiamen, Fujian 361028 (CN)
(72) Inventor: DONG, Furong, Xiamen, Fujian 361028 (CN); SHI, Jianping, Xiamen, Fujian 361028 (CN); WANG, Xingdong, Xiamen, Fujian 361028 (CN); WANG, Jianlin, Xiamen, Fujian 361028 (CN)
(74) Representative: Izquierdo Blanco, Maria Alicia
(86) International application number: PCT/CN2020/102672
(87) International publication number: WO 2021/077820

(56) References cited:
- EP-A1- 3 033 979
- EP-A1- 3 498 926
- WO-A1-2016/041624
- CN-A- 107 130 675
- CN-A- 110 206 113
- CN-A- 110 206 113
- CN-A- 110 206 113
- CN-A- 110 670 693
- CN-U- 206 396 855
- CN-U- 206 653 329
- CN-U- 207 032 416
- CN-U- 209 053 195
- DE-A1- 102017 116 113

## Description

### TECHNICAL FIELD

The invention relates to the technical field of bathroom accessories, in particular to a fixing device and sanitary ware having same.

### DESCRIPTION OF RELATED ART

A wall-hung toilet, as its name implies, is a toilet hung on a wall, including sitting toilets and urinals.

When a wall-hung toilet is installed, a water tank and a drain pipe are placed inside the wall, so there is only a toilet body on the wall and the water tank is invisible, which increases the space utilization rate of a bathroom. Moreover, the wall-hung toilet is hung on the wall surface and has a certain distance from the ground, which saves time and effort when cleaning the bathroom. Most importantly, the wall can well isolate the flushing noise, which has a good noise reduction effect. Because of its fashionable appearance, the character of being easy to clean, and good performance in saving space and reducing noise, the wall-hung toilet has gradually become popular in China in recent years and is widely used in upscale apartments. CN 110206113 A relates to a toilet locking device and discloses a fixing device for fixedly connecting a first component (wall body) and a second component (toilet seat body). DE 10 2017 116113 A1 relates to a clamping mechanism with a locking function. WO 2016/041624 A1 relates to a securing device for securing a sanitary object made of ceramic.

### BRIEF SUMMARY OF THE INVENTION

### Technical Problem

When an existing wall-hung toilet is installed, a locking device is used to fasten the toilet. However, before being fastened by the locking device, the toilet needs to be held by one person so that another person can fasten it, so more than one person is needed for installation, which is inconvenient.

### SOLUTIONS TO THE PROBLEM

### Technical Solution

In order to solve the above problems, the invention provides a fixing device and sanitary ware having same. By means of a limiting function of a pre-locking mechanism, the sanitary ware is pre-mounted, mounting can be realized by a single person, the operation is simple and convenient, and time and effort are saved.

In order to achieve the above purpose, the technical scheme adopted by the invention is as follows:

A fixing device is used for fixedly connecting a first component (10) and a second component (20). The fixing device comprises a connection member (30) connected to the first component (10) and a base (40) connected to the second component (20), the connection member (30) configured for being in lock connection with the base (40) by means of a locking mechanism (50). The fixing device further comprises a pre-locking mechanism having a pre-locking state and an unlocking state; before the locking mechanism locks the connection member (30) and the base (40), the pre-locking mechanism is in the pre-locking state, and the connection member (30) and the base (40) are in limited fitting by means of the pre-locking mechanism, so as to prevent the connection member (30) from being detached from the base (40), and when the pre-locking mechanism is in the unlocking state, the connection member (30) can be detached from the base (40) wherein the first component (10) is a wall or a rack, the second component (20) is a body of the sanitary ware.

The locking mechanism (50) is arranged on the base (40), and the pre-locking mechanism comprises a pre-locking fitting surface (311) arranged on the connection member (30) and a pre-locking part (54) arranged on the locking mechanism (50), wherein the pre-locking fitting surface (311) and/or the pre-locking part (54) can move between an unlocking position and a pre-locking position. When the pre-lock mechanism is in the pre-locking state, the pre-locking fitting surface (311) and/or the pre-locking part (54) is in the pre-locking position, and the pre-locking fitting surface (311) is in limited fitting with the pre-locking part (54), so that the connection member (30) and the base (40) are in limited fitting. When the pre-lock mechanism is in the unlocking state, the pre-locking fitting surface (311) and/or the pre-locking part (54) is in the unlocking position, and the pre-locking fitting surface (311) is separated from the pre-locking part (54), so that the connection member (30) can be separated from the base (40).

The connection member (30) is also provided with a locking fitting surface (312), and the locking mechanism (50) locks and connects the connection member (30) and the base (40) through locking fitting with the locking fitting surface (312). The connection member (30) is a connecting rod, the base (40) is internally provided with a connecting channel (41) into which the connecting rod is inserted, a side wall of the connecting channel (41) is provided with a radial through hole (42) communicating with the connecting channel (41), and the locking mechanism (50) is inserted into the connecting channel through the radial through hole (42). A side wall of the connection member (30) is provided with a concave part (31), and a surface of the concave part (31) is formed with the locking fitting surface (312).

The locking mechanism (50) comprises a screw connection member, which is in screw connection with the radial through hole (42), and when the screw connection member is rotated, the screw connection member is in locking fitting with the locking fitting surface (312).

Preferably, the screw connection member comprises a screw connection part (56) and an abutting member (51) movably arranged on the screw connection part (56). The pre-locking part (54) is arranged on the abutting member (51). In the pre-locking state, the pre-locking part (54) on the abutting member (51) is in limited fitting with the pre-locking fitting surface (311), and when the screw connection part (56) is rotated, the screw connection part (56) drives the abutting member (51) to make the abutting member (51) in locking fitting with the locking fitting surface (312).

Further, the abutting member (51) is a spring pin or a swing block, and the screw connection part (56) is a threaded bushing or a screw.

Preferably, the abutting member (51) is a spring pin, the screw connection part (56) is a threaded bushing, and the spring pin is sleeved with the threaded bushing. The spring pin comprises a bolt (511) and a spring (512), and one end of the bolt (511) extends out of the screw connection part (56) into the connecting channel (41) under the action of the spring (512) to be in limited fitting with the pre-locking fitting surface (311) or in locking fitting with the locking fitting surface (312). A side wall of an end of the bolt (511) extending into the connecting channel (41) forms the pre-locking part (54).

Preferably, the connection member (30) is further provided with a movable pin and an elastic member, the elastic member is arranged between the movable pin and the connecting rod, and the pre-locking fitting surface (311) is formed on the movable pin. The screw connection member is a screw (56'), and one end of the screw (56') extending into the connecting channel (41) is correspondingly provided with a limiting step (561). The limiting step (561) forms the pre-locking part (54). The movable pin can reciprocate under the action of the elastic member so that the pre-locking fitting surface (311) can reciprocate between the unlocking position and the pre-locking position. When the pre-locking mechanism is in the pre-locking state, the pre-locking fitting surface (311) abuts against the limiting step (561) for position limitation. When the pre-locking mechanism is in the unlocking state, the pre-locking fitting surface (311) is separated from the limiting step (561).

Preferably, the pre-locking fitting surface (311) is a first straight surface, the pre-locking part (54) is a second straight surface, and the locking fitting surface (312) is an arc surface or a straight surface.

In addition, the invention also provides sanitary ware, which comprises any fixing device described above, wherein the first component (10) is a wall or a rack, the second component (20) is a sanitary ware body, and the fixing device is used for fixedly connecting the body to the wall or the rack.

### BENEFICIAL EFFECTS OF THE INVENTION

### Beneficial Effects

(1) According to the invention, the connection member connected with the first component, which is the wall or rack, and the base connected with the second component, which is the sanitary ware, are locked and connected by the locking mechanism, the sanitary ware is pre-mounted by means of the limiting function of the pre-locking mechanism before being locked by the locking mechanism, mounting can be realized by a single person, the operation is simple and convenient, and time and effort are saved.
(2) According to the invention, the pre-locking fitting surface and the locking fitting surface are sequentially arranged in an insertion direction of the connection member, so that before the locking mechanism performs locking, the pre-locking mechanism is in the pre-locking state to enable limited fitting between the connection member and the base, so as to prevent the connection member from being detached from the base; and the structure is simple and compact, and the installation of the sanitary ware is more convenient.
(3) The locking mechanism of the invention comprises the screw connection member, through which mounting and dismounting are controlled; the screw connection member comprises the screw connection part and the abutting member movably arranged on the screw connection part, and the pre-locking part is arranged on the abutting member; in the pre-locking state, the pre-locking part on the abutting member is in limited fitting with the pre-locking fitting surface; when the screw connection part is rotated, the screw connection part drives the abutting member to make the abutting member in locking fitting with the locking fitting surface; limited fitting or locking fitting is controlled through the abutting member, and the abutting member is not only a part of the locking mechanism, but also a part of the pre-locking mechanism; and this conception is ingenious, the structure is compact, and functions are reliable.
(4) The abutting member is a spring pin, the screw connection part is a threaded bushing, and the spring pin is sleeved with the threaded bushing; the spring pin comprises the bolt and the spring, and the side wall of the end of the bolt extending into the connecting channel forms the pre-locking part; and the structure is simple and compact, and functions are reliable.

### BRIEF DESCRIPTION OF THE SEVERAL VIEWS OF THE DRAWINGS

The attached drawings are used to provide a further understanding of the invention and constitute a part of the invention. The illustrative embodiments of the invention and their descriptions are used to explain the invention, and do not constitute an improper limitation of the invention. In the drawings:
Fig. 1 is an exploded view of a fixing device according to a first embodiment of the invention;
Fig. 2 is a sectional view of a fixing device according to a first embodiment of the invention (unlocking state);
Fig. 3 is a sectional view of a fixing device according to a first embodiment of the invention (pre-locked with sanitary ware);
Fig. 4 is an enlarged view of part A in Fig. 3;
Fig. 5 is a sectional view of a fixing device according to a first embodiment of the invention (locked with sanitary ware);
Fig. 6 is an enlarged view of part B in Fig. 5;
Fig. 7 is a sectional view of a fixing device according to a second embodiment of the invention (unlocked with sanitary ware);
Fig. 8 is an enlarged view of part C in Fig. 7;
Fig. 9 is a sectional view of a fixing device according to a second embodiment of the invention (pre-locked with sanitary ware);
Fig. 10 is an enlarged view of part D in Fig. 9;
Fig. 11 is a sectional view of a fixing device according to a second embodiment of the invention (locked with sanitary ware);
Fig. 12 is an enlarged view of part E in Fig. 11; and
Fig. 13 is a sectional view of a fixing device being locked with sanitary ware according to a third embodiment of the invention (the sanitary ware is fixed on a rack by the fixing device).

In the drawings:
10-first component (wall or rack);
20-second component (sanitary ware body);
30-connection member (connecting rod); 31-concave part; 311-pre-locking fitting surface (first straight surface); 32-locking fitting surface (arc concave surface);
40-base; 41-connecting channel; 42-radial through hole;
50-locking mechanism;
51-abutting member (spring pin or swing block); 511-bolt; 512-spring;
52-first limiting part; 53-second limiting part; 54-pre-locking part (second straight surface);
55-positioning screw;
56-screw connection part (threaded bushing); 56'-screw; 561-limiting step;
57-movable pin; 58-elastic member.

### DETAILED DESCRIPTION OF THE INVENTION

In order to make the technical problems to be solved by the invention and the technical solutions and beneficial effects of the invention clearer, the invention will be further described in detail with reference to the drawings and embodiments. It should be understood that the specific embodiments described herein are only for the purpose of explaining the invention and are not intended to limit the invention.

A fixing device of the invention is used for fixedly connecting a first component 10 and a second component 20. The fixing device comprises a connection member 30 connected to the first component 10 and a base 40 connected to the second component 20, the connection member 30 configured for being in lock connection with the base 40 by means of a locking mechanism 50. The fixing device further comprises a pre-locking mechanism having a pre-locking state and an unlocking state; before the locking mechanism locks the connection member 30 and the base 40, the pre-locking mechanism is in the pre-locking state, and the connection member 30 and the base 40 are in limited fitting by means of the pre-locking mechanism, so as to prevent the connection member 30 from being detached from the base 40, and when the pre-locking mechanism is in the unlocking state, the connection member 30 can be detached from the base 40.

In a first embodiment, a screw connection member comprises a screw connection part and an abutting member, the screw connection part is a threaded bushing, the abutting member is a spring pin, and the abutting member is sleeved with the threaded bushing.

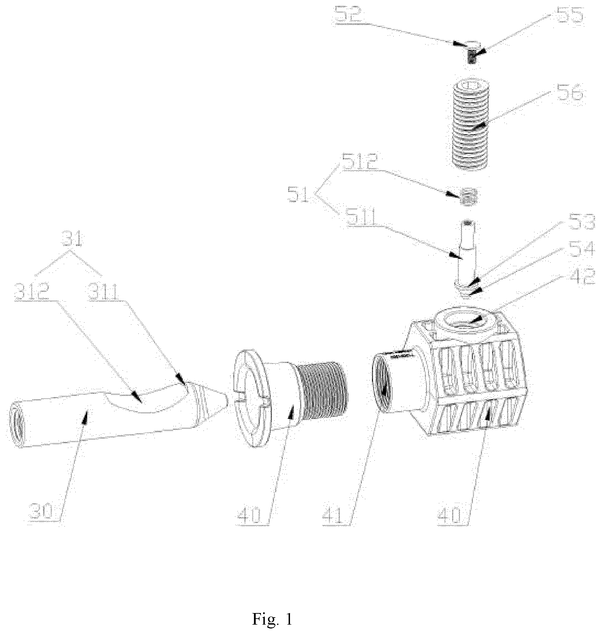

As shown in Figs. 1 to 6, in this embodiment, the locking mechanism 50 comprises a screw connection member, the screw connection member comprises a screw connection part 56 and an abutting member 51, the screw connection part 56 is a threaded bushing, the abutting member 51 is a spring pin which is movably arranged on the threaded bushing, and the locking mechanism 50 is arranged on the base 40.

The pre-locking mechanism comprises a pre-locking fitting surface 311 arranged on the connection member 30 and a pre-locking part 54 arranged on the locking mechanism 50, wherein the pre-locking fitting surface 311 and/or the pre-locking part 54 can move between an unlocking position and a pre-locking position.

When the pre-lock mechanism is in the pre-locking state, the pre-locking fitting surface 311 and/or the pre-locking part 54 is in the pre-locking position, and the pre-locking fitting surface 311 is in limited fitting with the pre-locking part 54, so that the connection member 30 and the base 40 are in limited fitting. When the pre-lock mechanism is in the unlocking state, the pre-locking fitting surface 311 and/or the pre-locking part 54 is in the unlocking position, and the pre-locking fitting surface 311 is separated from the pre-locking part 54, so that the connection member 30 can be separated from the base 40.

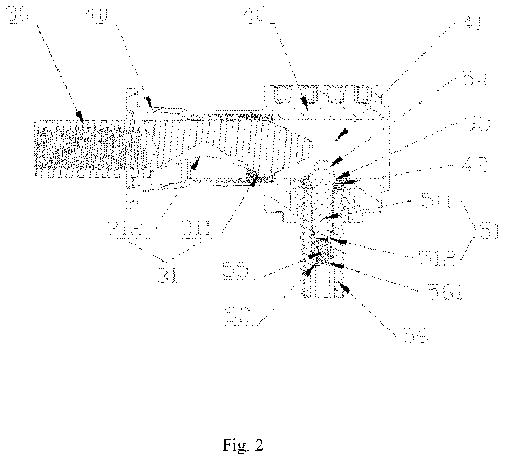

As shown in fig. 1 and fig. 2, the connection member 30 is provided with a locking fitting surface 312, and the locking mechanism 50 locks and connects the connection member 30 and the base 40 through locking fitting with the locking fitting surface 312. In this embodiment, the connection member 30 is a connecting rod, the base 40 is internally provided with a connecting channel 41 into which the connecting rod is inserted, a side wall of the connecting channel 41 is provided with a radial through hole 42 communicating with the connecting channel 41, and the locking mechanism 50 is inserted into the connecting channel through the radial through hole 42. A side wall of the connection member 30 is provided with a concave part 31, and a surface of the concave part 31 is formed with the locking fitting surface 312.

As shown in Fig. 1, in this embodiment, the pre-locking fitting surface 311 is arranged on an end side wall of the concave part 31, and the locking fitting surface 312 is arranged in the middle of the concave part 31. Preferably, the pre-locking fitting surface 311 is a first straight surface, the pre-locking part 54 is a second straight surface, and the locking fitting surface 312 is an arc concave surface. Alternatively, the locking fitting surface 312 may also be a straight surface.

As shown in Fig. 2, the screw connection member is in screw connection with the radial through hole 42, and when the screw connection member is rotated, the screw connection member is in locking fitting with the locking fitting surface 312. In this embodiment, the screw connection member comprises a screw connection part 56 and an abutting member 51 movably arranged on the screw connection part 56. The pre-locking part 54 is arranged on the abutting member 51. In the pre-locking state, the pre-locking part 54 on the abutting member 51 is in limited fitting with the pre-locking fitting surface 311, and when the screw connection part 56 is rotated, the screw connection part 56 drives the abutting member 51 to make the abutting member 51 in locking fitting with the locking fitting surface 312.

The abutting member 51 is a spring pin or a swing block, and the screw connection part 56 is a threaded bushing or a screw. In this embodiment, the abutting member 51 is a spring pin, the screw connection part 56 is a threaded bushing, and the spring pin is sleeved with the threaded bushing.

Specifically, the spring pin comprises a bolt 511 and a spring 512, and one end of the bolt 511 extends out of the screw connection part 56 into the connecting channel 41 under the action of the spring 512 to be in limited fitting with the pre-locking fitting surface 311 or in locking fitting with the locking fitting surface 312. A side wall of an end of the bolt 511 extending into the connecting channel 41 forms the pre-locking part 54. The bolt 511 is provided with a first limiting part 52, and the screw connection part 56 is provided with a limiting step 561 for limiting the first limiting part 52. The bolt 511 is prevented from falling out of the screw connection part 56 under the action of the spring 512 by the cooperation of the first limiting part 52 and the limiting step 561. The spring pin also comprises a positioning screw 55 in screw connection with the bolt 511. An end face of the positioning screw 55 forms the first limit part 52, and the end face of the positioning screw 55 is in limited fitting with the limiting step 561 on the screw connection part 56. The bolt 511 is also provided with a second limiting part 53, and an inner end face of the screw connection part 56 is in abutting fitting with the second limiting part 53. The screw connection part 56 drives the bolt 511 to move along the locking fitting surface 312 through the abutting fitting with the second limiting part 53 to lock the connection member 30 and the base 40.

In this embodiment, it is assumed that the first component is a wall and the second component is a toilet body, and the mounting and dismounting process of the fixing device is briefly described as follows:
Firstly, the connection member 30 is fixedly connected to the wall, and the base 40 is fixed on the toilet body 20.

As shown in Fig. 2, in an initial state, the spring pin (abutting member 51) is movably mounted in the threaded bushing (screw connection part 56) and partially extends out of the threaded bushing. The threaded bushing provided with the spring pin is screwed into the radial through hole 42 of the base 40, so that one end of the spring pin extends into the connecting channel 41. The toilet body 20 is moved towards the wall 10, so that the base 40 is in inserted fitting with the connection member 30 in an axial direction, allowing the connection member 30 to be inserted into the connecting channel 41 of the base 40 in the axial direction relative to the base 40. At this point, the pre-locking part 54 on the bolt 511 is not in limited fitting with the pre-locking fitting surface 311 on the connection member 30.

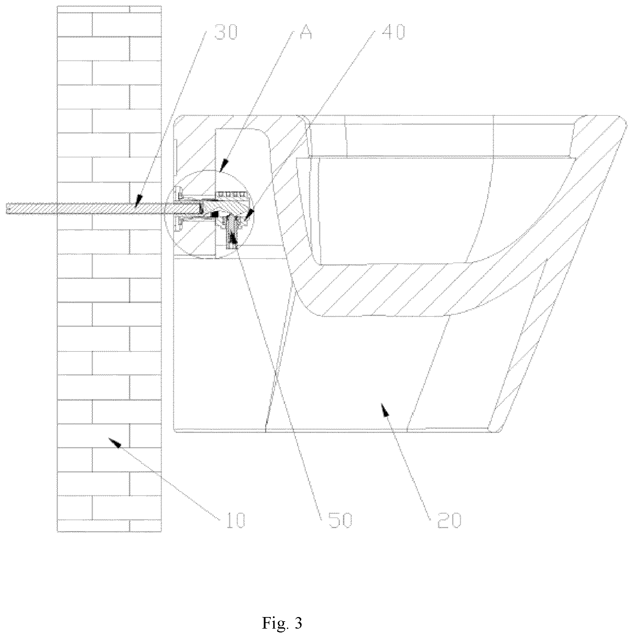

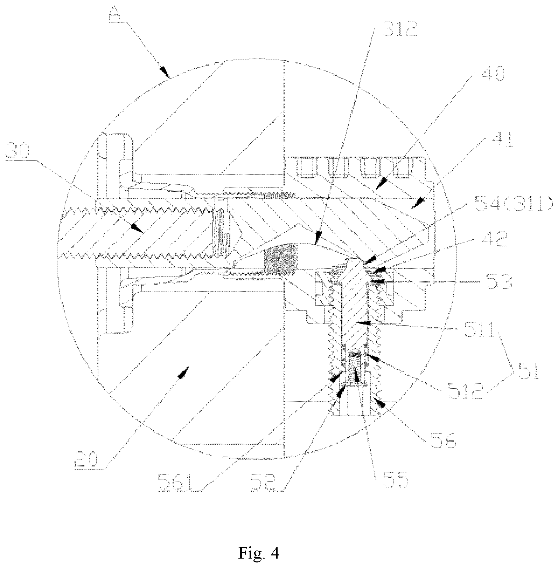

As shown in Figs. 3 and 4, the toilet body 20 is still moved towards the wall 10, so that the connection member 30 continues to be inserted into the connecting channel 41 of the base 40 in the axial direction, until the connection member 30 presses the spring pin (abutting member 51) to deform the spring pin, so that the pre-locking part 54 crosses the pre-locking fitting surface 311 (the first straight surface) of the connection member 30 to be in limited fitting with the pre-locking fitting surface 311; in this way, the base 40 will not be separated from the connection member 30, that is, the connection member 30 will not reversely retreat from the connecting channel 41, so that the toilet body can be hung by the pre-locking mechanism.

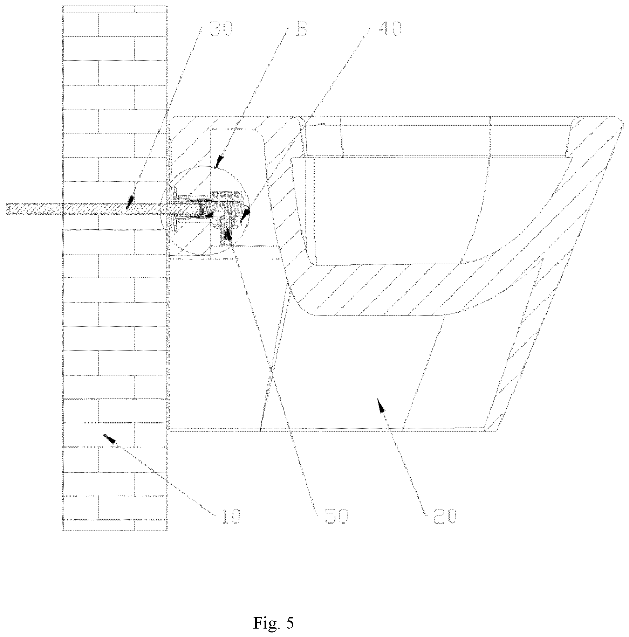

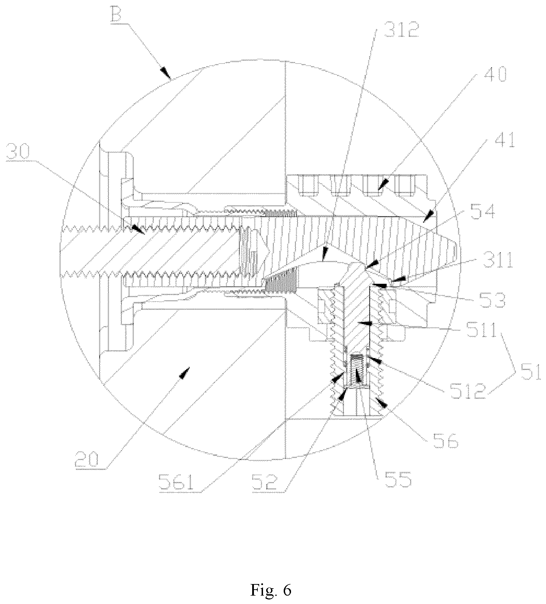

As shown in Figs. 5 and 6, at this point, the toilet body is caught by the connection member 30 and does not need to be held by a worker, the threaded bushing (screw connection part 56) can be rotated forward, an inner end face of the threaded bushing drives the spring pin to move along the locking fitting surface 312 (arc concave surface), so that the base 40 moves towards the wall, and then the wall and the toilet body are pressed close to each other, thus completing the locking of the toilet body.

The toilet body can be dismounted simply by turning the threaded bushing in the reverse direction until the pre-locking part 54 (second straight surface) of the spring pin retreats from the connecting channel 41 of the base 40 instead of being in limited fitting with the pre-locking fitting surface 311 (first straight surface) of the connection member 30. At this point, the pre-locking mechanism is in the unlocking state, so that the connection member 30 can be detached from the base 40, thereby completing the dismounting of the toilet.

In a second embodiment, the screw connection member is a screw, the pre-locking part is arranged at one end of the screw, the connection member is further provided with a movable pin and an elastic member, and the pre-locking fitting surface is formed on the movable pin.

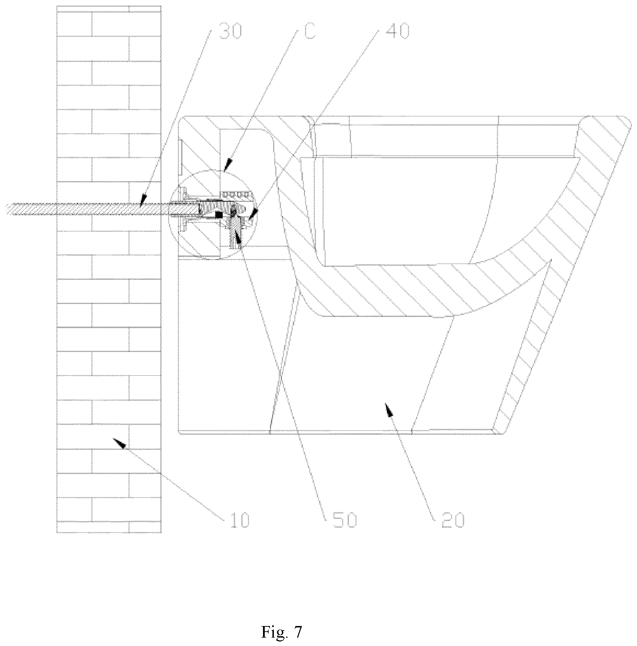

As shown in Figs. 7 to 12, the main difference between this embodiment and the first embodiment is that in this embodiment, the connection member 30 is further provided with a movable pin 57 and an elastic member 58, the elastic member 58 is a compression spring and is arranged between the movable pin 57 and the connecting rod, and the pre-locking fitting surface 311 is formed on the movable pin 57; the screw connection member is a screw 56', an end of the screw 56' extending into the connecting channel 41 is correspondingly provided with a limiting step 561, which forms the pre-locking part 54, and the movable pin 57 can reciprocate under the action of the elastic member 58 to enable the pre-locking fitting surface 311 to reciprocate between the unlocking position and the pre-locking position; when the pre-locking mechanism is in the pre-locking state, the pre-locking fitting surface 311 abuts against the limiting step 561 for position limitation; and when the pre-locking mechanism is in the unlocking state, the pre-locking fitting surface 311 is separated from the limiting step 561.

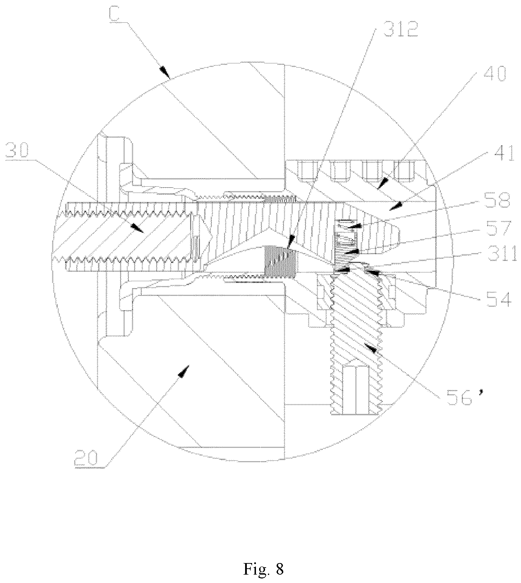

In this embodiment, a toilet is used as an example, it is assumed that the first component is a wall and the second component is a toilet body, and the mounting and dismounting process of the fixing device is briefly described as follows:
As shown in Figs. 7 and 8, in the initial state, the screw 56' of the locking mechanism 50 is screwed into the radial through hole 42 of the base 40, the movable pin 57 and the elastic member 58 are mounted in the connection member 30, and the movable pin 57 partially extends out of the connection member 30 under the spring force of the elastic member 58; the toilet body 20 is moved towards the wall 10, so that the base 40 is in inserted fitting with the connection member 30 in an axial direction, allowing the connection member 30 to be inserted into the connecting channel 41 of the base 40 in the axial direction relative to the base 40. At this point, the limiting step 561 (pre-locking part 54) on the screw 56' is not in limited fitting with the pre-locking fitting surface 311 on the movable pin 57.

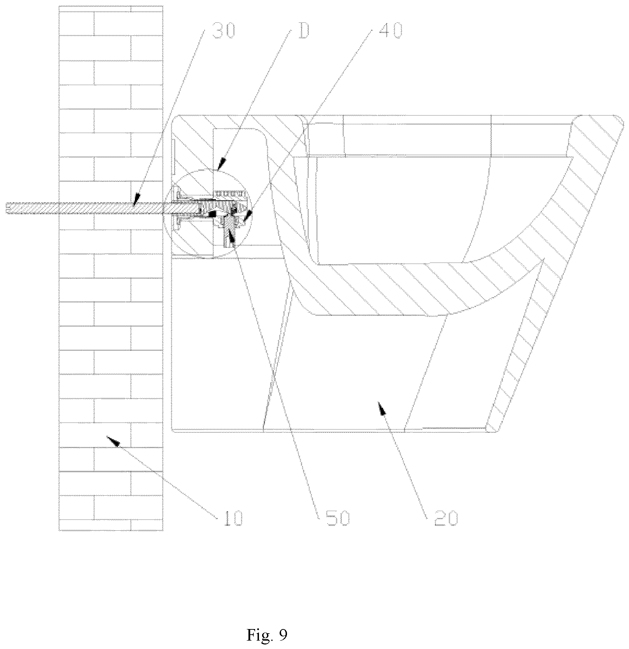

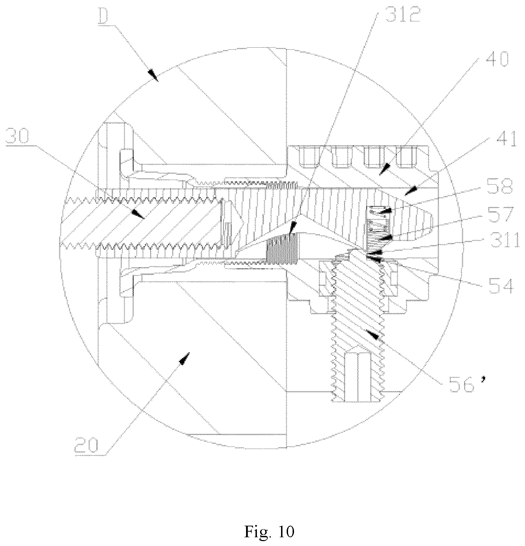

As shown in Figs. 9 and 10, the toilet body 20 is still moved towards the wall 10, so that the connection member 30 continues to be inserted into the connecting channel 41 of the base 40 in the axial direction, until the screw 56' presses the movable pin 57 to deform the elastic member 58, and the pre-locking part 54 on the screw 56' crosses the pre-locking fitting surface 311 (the first straight surface) on the movable pin 57 to be in limited fitting with the pre-locking fitting surface 311; in this way, the base 40 will not be separated from the connection member 30, that is, the connection member 30 will not reversely retreat from the connecting channel 41, so that the toilet body can be hung by the pre-locking mechanism.

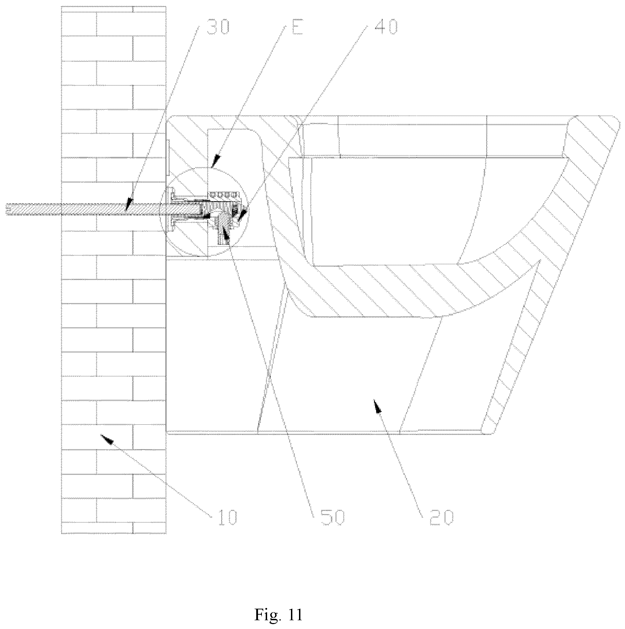

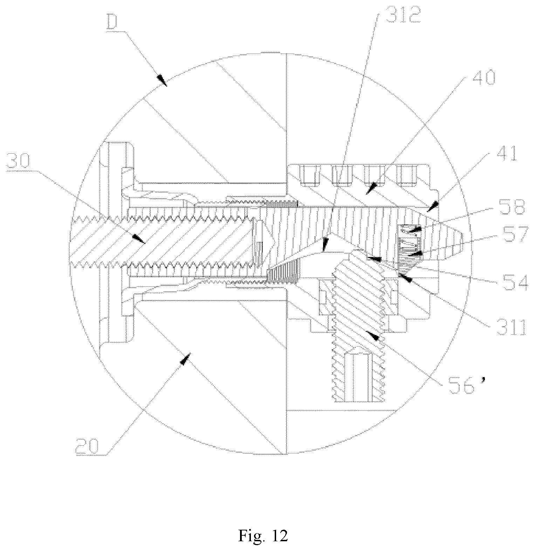

As shown in Figs. 11 and 12, at this point, the toilet body is caught by the connection member 30 and does not need to be held by a worker, the screw 56' can be rotated forward, an inner end face of the screw 56' moves along the locking fitting surface 312 (arc concave surface), so that the base 40 moves towards the wall, and then the wall and the toilet body are pressed close to each other, thus completing the locking of the toilet body.

The toilet can be dismounted simply by turning the screw 56' in the reverse direction until the pre-locking part 54 (second straight surface) of the screw 56' retreats from the connecting channel 41 of the base 40 instead of being in limited fitting with the pre-locking fitting surface 311 (first straight surface). At this point, the pre-locking mechanism is in the unlocking state, so that the connection member 30 can be detached from the base 40, thereby completing the dismounting of the toilet.

The rest of the structure of this embodiment is basically similar to that of the first embodiment and will not be repeated here.

In a third embodiment, the screw connection member is a screw, and the movable pin is replaced with a swing block.

The main difference between this embodiment and the second embodiment is that in this embodiment, the movable pin 57 is replaced with a swing block (not shown), on which the pre-locking fitting surface 311 is formed, and the swing block is mounted on the connection member 30 in a swinging manner, and is in limited fitting with the limiting step 561 (pre-locking part 54) on the screw 56' during the insertion of the connection member 30 into the connecting channel 41.

The rest of the structure and mounting and dismounting process of this embodiment are basically similar to those of the second embodiment, and will not be repeated here.

In a fourth embodiment, sanitary ware is provided.

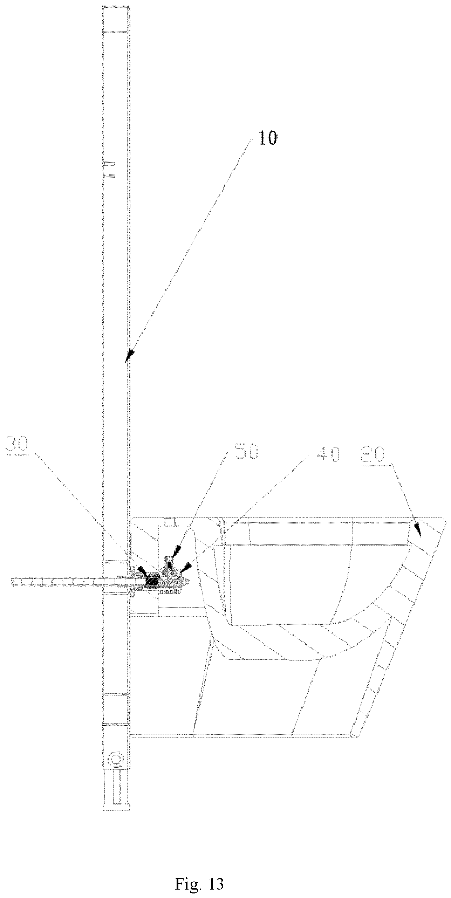

As shown in Figs. 3, 5, 7, 9 and 11, this embodiment also provides sanitary ware, which comprises the fixing device described in any one of the first, second and third embodiments above, wherein the first component 10 is a wall or a rack (as shown in Fig. 13), the second component 20 is a sanitary ware body, and the fixing device is used for fixedly connecting the body to the wall or the rack. In this embodiment, the body is a toilet body, or the body may also be a washstand, a bathroom cabinet, a mop pool, etc., which is not limited here.

The above description shows and describes the preferred embodiments of the invention. As mentioned above, it should be understood that the invention is not limited to the forms disclosed herein, should not be regarded as excluding other embodiments, but can be used in various other combinations, modifications and environments, and can be modified by the above teaching or the technology or knowledge in related fields within the scope of the appended claims.

## Claims

1. A fixing device used for fixedly connecting a first component (10) and a second component (20), the fixing device comprising a connection member (30) connected to the first component (10) and a base (40) connected to the second component (20), the connection member (30) configured for being in lock connection with the base (40) by means of a locking mechanism (50), wherein the fixing device further comprises a pre-locking mechanism having a pre-locking state and an unlocking state; before the locking mechanism locks the connection member (30) and the base (40), the pre-locking mechanism is in the pre-locking state, and the connection member (30) and the base (40) are in limited fitting by means of the pre-locking mechanism, so as to prevent the connection member (30) from being detached from the base (40); and when the pre-locking mechanism is in the unlocking state, the connection member (30) can be detached from the base (40),
wherein the first component (10) is a wall or a rack, the second component (20) is a body of the sanitary ware; the locking mechanism (50) is arranged on the base (40), and the pre-locking mechanism comprises a pre-locking fitting surface (311) arranged on the connection member (30) and a pre-locking part (54); the pre-locking fitting surface (311) and/or the pre-locking part (54) can move between an unlocking position and a pre-locking position; when the pre-lock mechanism is in the pre-locking state, the pre-locking fitting surface (311) and/or the pre-locking part (54) is in the pre-locking position, and the pre-locking fitting surface (311) is in limited fitting with the pre-locking part (54), so that the connection member (30) and the base (40) are in limited fitting; and when the pre-lock mechanism is in the unlocking state, the pre-locking fitting surface (311) and/or the pre-locking part (54) is in the unlocking position, and the pre-locking fitting surface (311) is separated from the pre-locking part (54), so that the connection member (30) can be separated from the base (40); wherein the connection member (30) is also provided with a locking fitting surface (312), and the locking mechanism (50) locks and connects the connection member (30) and the base (40) through locking fitting with the locking fitting surface (312); the connection member (30) is a connecting rod, the base (40) is internally provided with a connecting channel (41) into which the connecting rod is inserted, a side wall of the connecting channel (41) is provided with a radial through hole (42) communicating with the connecting channel (41), and the locking mechanism (50) is inserted into the connecting channel through the radial through hole (42); and a side wall of the connection member (30) is provided with a concave part (31), and a surface of the concave part (31) is formed with the locking fitting surface (312); the locking mechanism (50) comprises a screw connection member, which is in screw connection with the radial through hole (42), and when the screw connection member is rotated, the screw connection member is in locking fitting with the locking fitting surface (312);
**characterised in that**
the pre-locking part (54) is arranged on the locking mechanism (50).

2. The fixing device according to claim 1, wherein the screw connection member comprises a screw connection part (56) and an abutting member (51) movably arranged on the screw connection part (56); the pre-locking part (54) is arranged on the abutting member (51); and in the pre-locking state, the pre-locking part (54) on the abutting member (51) is in limited fitting with the pre-locking fitting surface (311), and when the screw connection part (56) is rotated, the screw connection part (56) drives the abutting member (51) to make the abutting member (51) in locking fitting with the locking fitting surface (312).

3. The fixing device according to claim 2, wherein the abutting member (51) is a spring pin or a swing block, and the screw connection part (56) is a threaded bushing or a screw.

4. The fixing device according to claim 3, wherein the abutting member (51) is a spring pin, the screw connection part (56) is a threaded bushing, and the spring pin is sleeved with the threaded bushing; the spring pin comprises a bolt (511) and a spring (512), and one end of the bolt (511) extends out of the screw connection part (56) into the connecting channel (41) under the action of the spring (512) to be in limited fitting with the pre-locking fitting surface (311) or in locking fitting with the locking fitting surface (312); and a side wall of an end of the bolt (511) extending into the connecting channel (41) forms the pre-locking part (54).

5. The fixing device according to claim 1, wherein the connection member (30) is further provided with a movable pin and an elastic member, the elastic member is arranged between the movable pin and the connecting rod, and the pre-locking fitting surface (311) is formed on the movable pin; the screw connection member is a screw (56'), and one end of the screw (56') extending into the connecting channel (41) is correspondingly provided with a limiting step; the limiting step forms the pre-locking part (54); the movable pin can reciprocate under the action of the elastic member so that the pre-locking fitting surface (311) can reciprocate between the unlocking position and the pre-locking position; when the pre-locking mechanism is in the pre-locking state, the pre-locking fitting surface (311) abuts against the limiting step for position limitation; and when the pre-locking mechanism is in the unlocking state, the pre-locking fitting surface (311) is separated from the limiting step.

6. The fixing device according to any one of claims 1-5, wherein the pre-locking fitting surface (311) is a first straight surface, the pre-locking part (54) is a second straight surface, and the locking fitting surface (312) is an arc surface or a straight surface.

7. Sanitary ware, comprising the fixing device according to any one of claims 1-6, wherein the first component (10) is a wall or a rack, the second component (20) is a body of the sanitary ware, and the fixing device is used for fixedly connecting the body to the wall or the rack.

## Patentansprüche

1. Eine Befestigungsvorrichtung zur festen Verbindung eines ersten Bauteils (10) und eines zweiten Bauteils (20), wobei die Befestigungsvorrichtung ein Verbindungselement (30), das mit dem ersten Bauteil (10) verbunden ist, und eine Basis (40), die mit dem zweiten Bauteil (20) verbunden ist, umfasst, das Verbindungselement (30) ist so konfiguriert, dass es mittels eines Verriegelungsmechanismus (50) in einer Verriegelungsverbindung mit der Basis (40) steht, die Befestigungsvorrichtung umfasst weiterhin einen Vorverriegelungsmechanismus mit einem Vorverriegelungszustand und einem Entriegelungszustand; bevor der Verriegelungsmechanismus das Verbindungselement (30) und die Basis (40) verriegelt, befindet sich der Vorverriegelungsmechanismus im Vorverriegelungszustand, und das Verbindungselement (30) und die Basis (40) sind durch den Vorverriegelungsmechanismus in einer begrenzten Passung, um zu verhindern, dass das Verbindungselement (30) von der Basis (40) gelöst wird; und wenn sich der Vorverriegelungsmechanismus im Entriegelungszustand befindet, kann das Verbindungselement (30) von der Basis (40) gelöst werden, wobei das erste Bauteil (10) eine Wand oder ein Gestell ist, das zweite Bauteil (20) ein Gehäuse der Sanitärware ist; der Verriegelungsmechanismus (50) auf der Basis (40) angeordnet ist, und der Vorverriegelungsmechanismus eine Vorverriegelungs-Passfläche (311), die am Verbindungselement (30) angeordnet ist, und ein Vorverriegelungsteil (54) umfasst; die Vorverriegelungs-Passfläche (311) und/oder das Vorverriegelungsteil (54) zwischen einer Entriegelungsposition und einer Vorverriegelungsposition bewegt werden können; wenn sich der Vorverriegelungsmechanismus im Vorverriegelungszustand befindet, sind die Vorverriegelungs-Passfläche (311) und/oder das Vorverriegelungsteil (54) in der Vorverriegelungsposition, und die Vorverriegelungs-Passfläche (311) befindet sich in einer begrenzten Passung mit dem Vorverriegelungsteil (54), so dass das Verbindungselement (30) und die Basis (40) in begrenzter Passung sind; und wenn sich der Vorverriegelungsmechanismus im Entriegelungszustand befindet, sind die Vorverriegelungs-Passfläche (311) und/oder das Vorverriegelungsteil (54) in der Entriegelungsposition, und die Vorverriegelungs-Passfläche (311) ist vom Vorverriegelungsteil (54) getrennt, so dass das Verbindungselement (30) von der Basis (40) getrennt werden kann; wobei das Verbindungselement (30) zudem mit einer Verriegelungs-Passfläche (312) versehen ist, und der Verriegelungsmechanismus (50) das Verbindungselement (30) und die Basis (40) durch eine Verriegelungspassung mit der Verriegelungs-Passfläche (312) verbindet und verriegelt; das Verbindungselement (30) ist eine Verbindungsstange, die Basis (40) ist innen mit einem Verbindungskanal (41) versehen, in den die Verbindungsstange eingeführt wird, eine Seitenwand des Verbindungskanals (41) ist mit einem radialen Durchgangsloch (42) versehen, das mit dem Verbindungskanal (41) kommuniziert, und der Verriegelungsmechanismus (50) wird durch das radiale Durchgangsloch (42) in den Verbindungskanal eingeführt; und eine Seitenwand des Verbindungselements (30) ist mit einem konkaven Teil (31) versehen, und eine Oberfläche des konkaven Teils (31) bildet die Verriegelungs-Passfläche (312); der Verriegelungsmechanismus (50) ein Schraubverbindungselement in Schraubverbindung mit dem radialen Durchgangsloch (42) umfasst, und wenn das Schraubverbindungselement gedreht wird, befindet sich das Schraubverbindungselement in Verriegelungspassung mit der Verriegelungspassfläche (312);
**dadurch gekennzeichnet, dass** das Vorverriegelungsteil (54) auf dem Verriegelungsmechanismus (50) angeordnet ist.

2. Befestigungsvorrichtung nach Patentanspruch 1, wobei das Schraubverbindungselement ein Schraubverbindungsteil (56) und ein Druckelement (51) umfasst, das beweglich am Schraubverbindungsteil (56) angeordnet ist; das Vorverriegelungsteil (54) ist am Druckelement (51) angeordnet; und im Vorverriegelungszustand ist das Vorverriegelungsteil (54) am Druckelement (51) in begrenzter Passung mit der Vorverriegelungs-Passfläche (311), und wenn das Schraubverbindungsteil (56) gedreht wird, treibt das Schraubverbindungsteil (56) das Druckelement (51) an, so dass das Druckelement (51) in Verriegelungspassung mit der Verriegelungs-Passfläche (312) steht.

3. Befestigungsvorrichtung nach Patentanspruch 2, wobei das Druckelement (51) ein Federstift oder ein Schwenkblock ist und das Schraubverbindungsteil (56) eine Gewindebuchse oder eine Schraube ist.

4. Befestigungsvorrichtung nach Patentanspruch 3, wobei das Druckelement (51) ein Federstift ist, das Schraubverbindungsteil (56) ist eine Gewindebuchse, und der Federstift ist mit der Gewindebuchse ummantelt; der Federstift umfasst einen Bolzen (511) und eine Feder (512), und ein Ende des Bolzens (511) ragt aus dem Schraubverbindungsteil (56) in den Verbindungskanal (41) unter der Wirkung der Feder (512), um in begrenzter Passung mit der Vorverriegelungs-Passfläche (311) oder in Verriegelungspassung mit der VerriegelungsPassfläche (312) zu stehen; und eine Seitenwand eines Endes des Bolzens (511), das in den Verbindungskanal (41) ragt, bildet das Vorverriegelungsteil (54).

5. Befestigungsvorrichtung nach Patentanspruch 1, wobei das Verbindungselement (30) zusätzlich mit einem beweglichen Stift und einem elastischen Element versehen ist, das elastische Element ist zwischen dem beweglichen Stift und der Verbindungsstange angeordnet, und die Vorverriegelungs-Passfläche (311) ist am beweglichen Stift ausgebildet; das Schraubverbindungselement ist eine Schraube (56'), und ein Ende der Schraube (56'), das in den Verbindungskanal (41) ragt, ist entsprechend mit einem Begrenzungsansatz versehen; der Begrenzungsansatz bildet das Vorverriegelungsteil (54); der bewegliche Stift kann unter der Wirkung des elastischen Elements hin- und herbewegen, so dass die Vorverriegelungs-Passfläche (311) zwischen der Entriegelungsposition und der Vorverriegelungsposition hin- und herbewegen kann; wenn sich der Vorverriegelungsmechanismus im Vorverriegelungszustand befindet, stößt die Vorverriegelungs-Passfläche (311) gegen den Begrenzungsansatz zur Positionsbegrenzung; und wenn sich der Vorverriegelungsmechanismus im Entriegelungszustand befindet, ist die Vorverriegelungs-Passfläche (311) vom Begrenzungsansatz getrennt.

6. Befestigungsvorrichtung nach einem der Patentansprüche 1-5, wobei die Vorverriegelungs-Passfläche (311) eine erste gerade Fläche, das Vorverriegelungsteil (54) eine zweite gerade Fläche und die Verriegelungs-Passfläche (312) eine Bogenfläche oder eine gerade Fläche ist.

7. Sanitärware, umfassend die Befestigungsvorrichtung nach einem der Patentansprüche 1-6, wobei das erste Bauteil (10) eine Wand oder ein Gestell ist, das zweite Bauteil (20) ein Gehäuse der Sanitärware ist und die Befestigungsvorrichtung verwendet wird, um das Gehäuse fest mit der Wand oder dem Gestell zu verbinden.

## Revendications

1. Dispositif de fixation utilisé pour relier de manière fixe un premier composant (10) et un second composant (20), le dispositif de fixation comprenant un élément de connexion (30) relié au premier composant (10) et une base (40) reliée au second composant (20), l'élément de connexion (30) étant configuré pour être en connexion verrouillée avec la base (40) au moyen d'un mécanisme de verrouillage (50), le dispositif de fixation comprenant en outre un mécanisme de pré-verrouillage ayant un état de pré-verrouillage et un état de déverrouillage ; avant que le mécanisme de verrouillage ne verrouille l'élément de connexion (30) et la base (40), le mécanisme de pré-verrouillage est dans l'état de pré-verrouillage, et l'élément de connexion (30) et la base (40) sont en ajustement limité au moyen du mécanisme de pré-verrouillage, afin d'empêcher l'élément de connexion (30) d'être détaché de la base (40) ; et lorsque le mécanisme de pré-verrouillage est dans l'état de déverrouillage, l'élément de connexion (30) peut être détaché de la base (40), dans lequel le premier composant (10) est un mur ou un support, le second composant (20) est un corps de la pièce sanitaire ; le mécanisme de verrouillage (50) est disposé sur la base (40), et le mécanisme de pré-verrouillage comprend une surface d'ajustement de pré-verrouillage (311) disposée sur l'élément de connexion (30) et une pièce de pré-verrouillage (54) ; la surface d'ajustement de pré-verrouillage (311) et/ou la pièce de pré-verrouillage (54) peuvent se déplacer entre une position de déverrouillage et une position de pré-verrouillage ; lorsque le mécanisme de pré-verrouillage est dans l'état de pré-verrouillage, la surface d'ajustement de pré-verrouillage (311) et/ou la pièce de pré-verrouillage (54) sont dans la position de pré-verrouillage, et la surface d'ajustement de pré-verrouillage (311) est en ajustement limité avec la pièce de pré-verrouillage (54), de sorte que l'élément de connexion (30) et la base (40) sont en ajustement limité ; et lorsque le mécanisme de pré-verrouillage est dans l'état de déverrouillage, la surface d'ajustement de pré-verrouillage (311) et/ou la pièce de pré-verrouillage (54) sont dans la position de déverrouillage, et la surface d'ajustement de pré-verrouillage (311) est séparée de la pièce de pré-verrouillage (54), de sorte que l'élément de connexion (30) peut être séparé de la base (40) ; dans lequel l'élément de connexion (30) est également pourvu d'une surface d'ajustement de verrouillage (312), et le mécanisme de verrouillage (50) verrouille et connecte l'élément de connexion (30) et la base (40) par ajustement de verrouillage avec la surface d'ajustement de verrouillage (312) ; l'élément de connexion (30) est une tige de connexion, la base (40) est pourvue intérieurement d'un canal de connexion (41) dans lequel la tige de connexion est insérée, une paroi latérale du canal de connexion (41) étant pourvue d'un trou traversant radial (42) communiquant avec le canal de connexion (41), et le mécanisme de verrouillage (50) est inséré dans le canal de connexion par le trou traversant radial (42) ; et une paroi latérale de l'élément de connexion (30) est pourvue d'une partie concave (31), et une surface de la partie concave (31) forme la surface d'ajustement de verrouillage (312) ; le mécanisme de verrouillage (50) comprend un élément de connexion à vis, qui est en connexion à vis avec le trou traversant radial (42), et lorsque l'élément de connexion à vis est tourné, l'élément de connexion à vis est en ajustement de verrouillage avec la surface d'ajustement de verrouillage,
**caractérisé en ce que**
la pièce de pré-verrouillage (54) est disposée sur le mécanisme de verrouillage (50).

2. Dispositif de fixation selon la revendication 1, dans lequel l'élément de connexion à vis comprend une partie de connexion à vis (56) et un élément d'appui (51) disposé de manière mobile sur la partie de connexion à vis (56) ; la pièce de pré-verrouillage (54) est disposée sur l'élément d'appui (51) ; et dans l'état de pré-verrouillage, la pièce de pré-verrouillage (54) sur l'élément d'appui (51) est en ajustement limité avec la surface d'ajustement de pré-verrouillage (311), et lorsque la partie de connexion à vis (56) est tournée, la partie de connexion à vis (56) entraîne l'élément d'appui (51) pour mettre l'élément d'appui (51) en ajustement de verrouillage avec la surface d'ajustement de verrouillage (312).

3. Dispositif de fixation selon la revendication 2, dans lequel l'élément d'appui (51) est une broche à ressort ou un bloc pivotant, et la partie de connexion à vis (56) est une bague filetée ou une vis.

4. Dispositif de fixation selon la revendication 3, dans lequel l'élément d'appui (51) est une broche à ressort, la partie de connexion à vis (56) est une bague filetée, et la broche à ressort est manchonnée avec la bague filetée ; la broche à ressort comprend un boulon (511) et un ressort (512), et une extrémité du boulon (511) s'étend hors de la partie de connexion à vis (56) dans le canal de connexion (41) sous l'action du ressort (512) pour être en ajustement limité avec la surface d'ajustement de pré-verrouillage (311) ou en ajustement de verrouillage avec la surface d'ajustement de verrouillage (312) ; et une paroi latérale d'une extrémité du boulon (511) s'étendant dans le canal de connexion (41) forme la pièce de pré-verrouillage (54).

5. Dispositif de fixation selon la revendication 1, dans lequel l'élément de connexion (30) est en outre pourvu d'une broche mobile et d'un élément élastique, l'élément élastique est disposé entre la broche mobile et la tige de connexion, et la surface d'ajustement de pré-verrouillage (311) est formée sur la broche mobile ; l'élément de connexion à vis est une vis (56'), et une extrémité de la vis (56') s'étendant dans le canal de connexion (41) est pourvue d'un épaulement de limitation ; l'épaulement de limitation forme la pièce de pré-verrouillage (54) ; la broche mobile peut se déplacer en va-et-vient sous l'action de l'élément élastique de sorte que la surface d'ajustement de pré-verrouillage (311) puisse se déplacer entre la position de déverrouillage et la position de pré-verrouillage ; lorsque le mécanisme de pré-verrouillage est dans l'état de pré-verrouillage, la surface d'ajustement de pré-verrouillage (311) s'appuie contre l'épaulement de limitation pour la limitation de position ; et lorsque le mécanisme de pré-verrouillage est dans l'état de déverrouillage, la surface d'ajustement de pré-verrouillage (311) est séparée de l'épaulement de limitation.

6. Dispositif de fixation selon l'une quelconque des revendications 1 à 5, dans lequel la surface d'ajustement de pré-verrouillage (311) est une première surface droite, la pièce de pré-verrouillage (54) est une seconde surface droite, et la surface d'ajustement de verrouillage (312) est une surface arquée ou une surface droite.

7. Pièce sanitaire, comprenant le dispositif de fixation selon l'une quelconque des revendications 1 à 6, dans lequel le premier composant (10) est un mur ou un support, le second composant (20) est un corps de la pièce sanitaire, et le dispositif de fixation est utilisé pour fixer le corps de manière fixe au mur ou au support.
